# EUROPEAN PATENT SPECIFICATION

(11) **EP 2 485 350 B1**
(45) Date of publication and mention of the grant of the patent: **20.07.2016**
(21) Application number: 12153125.5
(22) Date of filing: 30.01.2012
(51) Int. Cl.: H02G 1/00, H02G 3/12

(54) **Junction or wall box to be used for setting up electrical systems in plasterboard walls**
Verteiler- oder Wandkasten zum Einrichten von elektrischen Systemen in Gipskartonwänden
Boîte de jonction ou murale destinée à être utilisée pour configurer des systèmes électriques dans des murs en placoplâtre

(30) Priority: 02.02.2011 IT VI20110017
(43) Date of publication of application: 08.08.2012
(73) Proprietor: Pellizzari, Gianni, 31020 S. Zenone Degli Ezzelini (TV) (IT)
(72) Inventor: Pellizzari, Gianni, 31020 S. Zenone Degli Ezzelini (TV) (IT)
(74) Representative: Bettello, Pietro

(56) References cited:
- DE-U1- 9 001 906
- US-B1- 6 875 922

## Description

The present invention relates to a junction or wall box to be used for setting up electrical systems in plasterboard walls.

Junction boxes are currently known, which consist of a box-shaped body having a closed bottom portion and a series of side walls (generally four) defining a box-shaped body open at the front and having a substantially rectangular section.

Such boxes are positioned within seats obtained on the wall; so as to be steadily anchored during the subsequent positioning steps (by electricians or technicians) of the electrical devices or of the technological networks in general.

When the wall consists of a solid wall, such as a brick wall, the box is inserted within a seat obtained onto the same wall and is kept blocked therein by the interposition of mortar or similar adhesives.

On the other hand, when the wall is empty, as when it is made of plasterboard, consisting of two sheets supported by a metal structure, arranged opposite and mutually spaced, the box is inserted into the air space between the two sheets and anchored to one of said sheets.

Several types of junction or wall boxes are known according to the prior art, to be mounted onto plasterboard walls, which are provided with devices that keep the box onto the sheet, after a slit has been obtained into said sheet wherein the same box is inserted.

As is well known by the fetters of technological networks and in particular by the electricians, while such types of junction or wall boxes for plasterboard walls are widely used, they are not free from drawbacks, among which we should note in the first place the difficulty and laboriousness of the operation for applying the same boxes.

The box application currently takes place only once the wall has been completed, that is, when the two sheets are mounted onto the structure, the cable holder corrugated pipes have been inserted into the air space and optionally, in addition, said air space has also been filled with insulating material.

In the practice, the point where the box has to be applied is first marked on the sheet, then a quadrilateral hole is made, sized slightly larger than the box-shaped body; thereafter, the corrugated pipes are extracted from the air space to be connected to the box and finally, the box is inserted onto the hole and metal fins that pull and hold the box in line (front abutment) onto the wall are actuated.

It is clear that such anchoring operation is quite difficult since in addition to the use of a particular tool, the miller, during the drilling there is the risk of damaging the cables within the air space; moreover, the location and extraction of the specific corrugated pipes from said air space are difficult.

The most relevant prior art documents of the state of the art are: US6875922B1, DE9001906U1 and WO97/44552A2.

The object of the present invention is to eliminate of at least drastically reduce the drawbacks mentioned above during the positioning of the junction or wall boxes. Within this task, a further object of the present invention is to provide a junction or wall box which allows a quick and practical anchoring of the same onto the plasterboard wall.

A further object of the present invention is to provide a junction or wall box of long durability and having a competitive production cost, so that the use thereof is advantageous also from the economic point of view.

This task, as well as these and further objects that shall appear more clearly hereinafter, are achieved by a junction or wall box to be applied onto plasterboard walls, which is characterised in that it comprises a box-shaped containment body shaped so as to be applied onto an unfinished, so-called "open" wall, that is, when a single sheet is mounted on the metal support structure.

Operatively, once the half-wall or "open wall", consisting of a single wall, has been made, the boxes of the invention are applied, according to the design scheme, onto the inner side of the sheet mounted and the relevant corrugated pipes containing the electrical wires are connected thereto.

Thereafter, the second wall is applied so that the boxes are enclosed and retained within the air space.

At the end, the electrician makes the openings onto the two walls, at the boxes, required for applying the electrical components such as plugs, thermostats, regulators and the like.

Further feature and advantages of the invention will appear more clearly from the description of a possible embodiment thereof, illustrated by way of a non-limiting example in the annexed drawings tables, wherein:

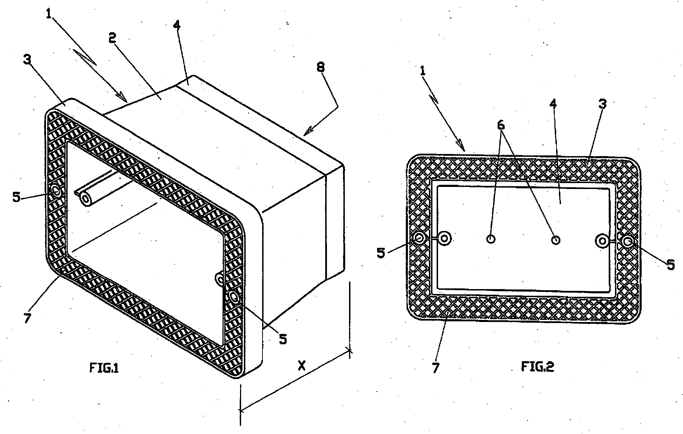

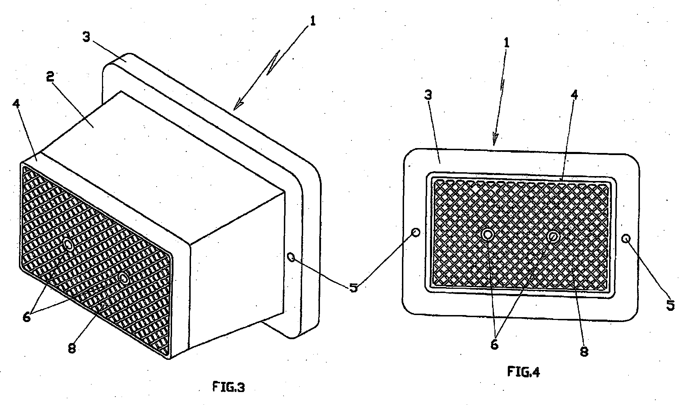

- figs. 1, 2 - 3, 4 (tab. I - II) show perspective and elevation front and back views, respectively, of the box of the invention;
- fig. 5 (tab. III) shows a cutaway view of a plasterboard walk provided with the box of the invention;
- figs. 6, 7 (tab. IV - V) show the temporary and final application steps, respectively, of the box onto the open wall.

As is seen in figs; 1-4, the box of the invention, globally indicated with reference numeral 1, consists of a box-shaped body 2 with the front opening provided with a thick collar 3 and with the back closed by a thick bottom 4.

A pair of through holes 5 and 6 is obtained on collar 3 and on the bottom wall 4 which have the function of allowing the passage of screws 10 for the temporary application of the box onto the plasterboard sheet; "L1", as better described hereinafter.

Moreover, the portion of material that makes up both collar 3 and the bottom wall 4 is characterised by an alveolar structure 7 e 8, with quadrilateral holes of such size as to ensure a stable screwing of screws 20 which permanently retain box 1 onto sheet "L1" as better described hereinafter.

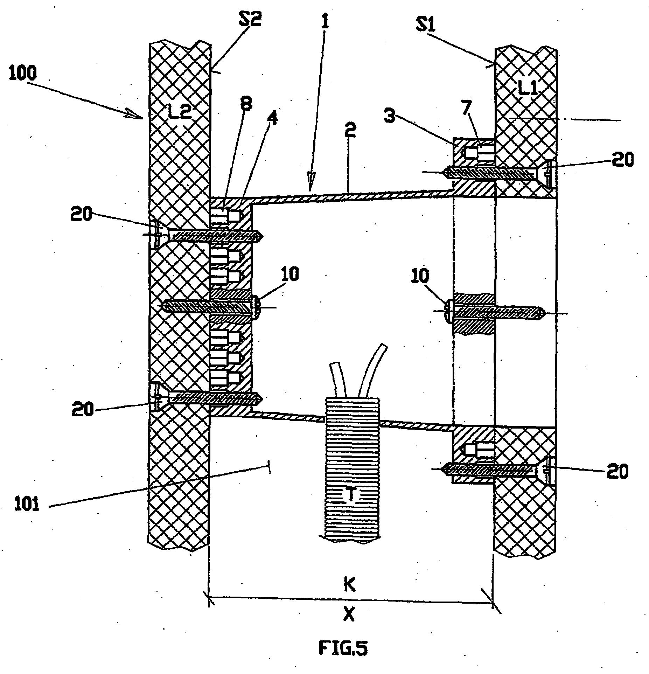

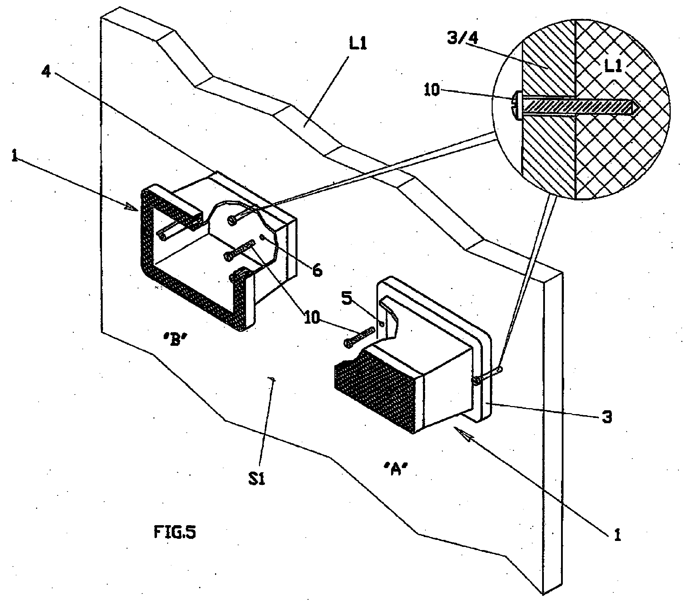

As is seen in fig. 5, in the finished plasterboard wall 100 box 1 of the invention is fully positioned within the air space 101 defined between the two opposite sheets "L1, L2" and has a width "X" equal to width "K" of said air space, so as to abut against the inner surfaces "S1, S2" of said two sheets. It is noted that sometimes, for technical-structural reasons, each one of sheets "L1" and "L2" consists of a plurality of single sheets arranged reciprocally leaning.

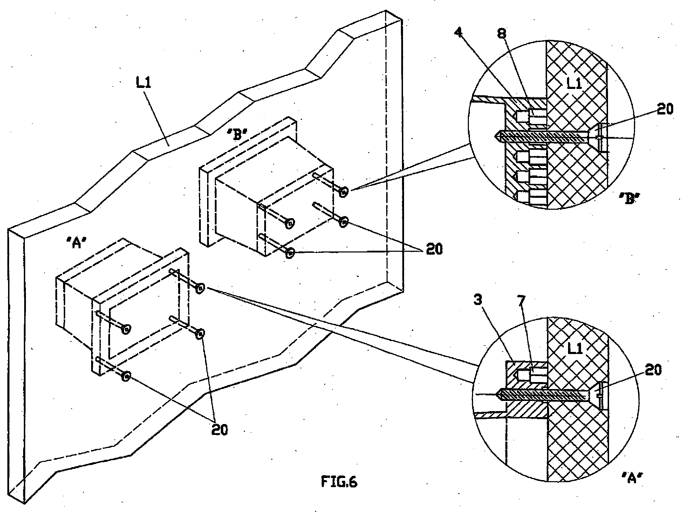

The final shape described in fig. 5 is obtained by the following operations:
a) temporary fixing (fig. 6): after making an open wall with sheet "L1", box 1 is applied into the inner surface "S1", that is, that facing the air space, bringing it in abutment against collar 3 (pos. A) or bottom 4 (pos. B), by screwing screws 10 through the pairs of holes 5 and 6;
b) connecting the electrical cables: the corrugated pipes "T" of the electrical wires are connected to box 1;
c) making the finished wall 100: sheet "L2" that traps box 1 into air space 101 is mounted onto the metal support structure;
d) final fixing (fig. 7): screws 20 are screwed from the outside to engage onto collar 3 or bottom 4.

In particular, while box 1 is made of a "soft" plastic material (technopolymer), that is, little resistant to threading, it is still possible to obtain a considerable final fixing since the holes of the alveolar structure of collar 3 and of bottom 4 impart a forced screwing to screw 20, which allows the operator to continue the screwing action until the head of screw 20, deforming the plasterboard, fully positions itself within the sheet (see detail of fig. 7).

In the practice, the shapes and dimensions of box 1 as well as the materials used, may be different provided that all falls within the inventive concept defined by the following claims.

## Claims

1. JUNCTION OR WALL BOX TO BE USED FOR SETTING UP ELECTRICAL SYSTEMS IN PLASTERBOARD WALLS, said box (1) comprising a box-shaped containment (2), shaped so that it is subject to be applied onto an unfinished, so- called "open" wall, that is, when a single sheet (L1) or a plurality of sheets (L1) is mounted, mutually placed leaning, on the metal support structure of the plasterboard wall, it being further provided that in the finished plasterboard wall (100), the box (1) fully positions itself within the air space (101), defined between the two opposite sheets (L1, L2), the box having a width (X) equal to the width (K) of the air space (101), so as to abut against the two inner surfaces (S1, S2) of the two sheets (L 1, L2), the box being **characterised in that** the box-shaped body (2) is provided at the front opening with a thick collar (3) and **in that** the back is closed by a thick bottom (4).

2. JUNCTION OR WALL BOX, according to claim 1, **characterised in that** the portion of material that makes the collar (3) and the bottom wall (4) has an alveolar structure (7, 8).

3. JUNCTION OR WALL BOX, according to claim 2, **characterised in that** the alveolar structure (7, 8) is defined by quadrilateral holes of such size as to ensure a stable screwing of the screws (20) also when the material making the collar (3) and the bottom (4) is of the plastic type, with limited hardness and resistance.

4. JUNCTION OR WALL BOX, according to one or more of the previous claims, **characterised in that** a pair of through holes (5, 6) is obtained on the collar (3) and on the bottom (4) which have the function of allowing the passage of the screws (10) for the temporary application of the box (1) onto the sheet (L1) of the open wall.

5. MOUNTING OF THE JUNCTION OR WALL BOX, according to one or more of the previous claims, **characterised in that** it provides for the following steps:
a) temporary fixing: after making an open wall with the sheet (L1), the box (1) is applied into the inner surface (SI), that facing the air space (101), bringing it in abutment against the collar (3) or the bottom (4), by screwing screws (10) through the pairs of holes (5, 6);
b) connecting the electrical cables: the corrugated pipes (T) of the electrical wires are connected to the box (1);
c) making the finished wall (100): the sheet (L2) that traps the box (1) into the air space (101) is mounted onto the metal support structure;
d) final fixing: the screws (20) are screwed from the outside to engage onto the collar (3) or bottom (4).

6. PLASTERBOARD WALL, **characterised in that** it comprises junction or wall boxes, according to one or more of claims 1 to 4.

7. PLASTERBOARD WALL, **characterised in that** the junction or wall boxes (1) are mounted according to the methods of claim 5.

## Patentansprüche

1. VERTEILER- ODER WANDKASTEN ZUM EINRICHTEN VON ELEKTRISCHEN SYSTEMEN IN GIPSKARTONWÄNDEN, wobei der Kasten (1) ein kastenförmiges Behältnis (2) umfasst, das derart geformt ist, dass es an einer unfertigen, so genannten "offenen" Wand angebracht werden kann, das heißt, wenn eine einzelne Platte (L1) oder mehrere, sich gegenseitig abstützende Platten (L1) auf der Metallhalterungsstruktur der Gipskartonwand befestigt sind, wobei ferner vorgesehen ist, dass der Kasten (1) sich in der gefertigten Gipskarton wand (100) vollständig innerhalb des Luftraums (101) positioniert, der zwischen den beiden gegenüberliegenden Platten (L1, L2) definiert ist, wobei der Kasten eine Breite (X) aufweist, die gleich der Breite (K) des Luftraums (101) ist, so dass er gegen die beiden Innenflächen (S1, S2) der beiden Platten (L1, L2) anliegt, wobei der Kasten **dadurch gekennzeichnet ist, dass** der kastenförmige Körper (2) an der vorderen Öffnung mit einem dicken Bund (3) versehen ist und dass die Rückseite mit einem dicken Boden (4) verschlossen ist.

2. VERTEILER- ODER WANDKASTEN nach Anspruch 1, **dadurch gekennzeichnet, dass** der Abschnitt des Materials, das den Bund (3) und die Bodenwand (4) bildet, eine wabenartige Struktur (7, 8) aufweist.

3. VERTEILER- ODER WANDKASTEN nach Anspruch 2, **dadurch gekennzeichnet, dass** die wabenartige Struktur (7, 8) durch viereckige Löcher einer derartigen Größe definiert ist, dass ein stabiles Eindrehen der Schrauben (20) auch dann gesichert ist, wenn das Material, das den Bund (3) und den Boden (4) bildet, vom Kunststofftyp ist und eine begrenzte Härte und Widerstandsfähigkeit aufweist.

4. VERTEILER- ODER WANDKASTEN nach einem oder mehreren der vorstehenden Ansprüche, **dadurch gekennzeichnet, dass** ein Paar von durchgehenden Löchern (5, 6) auf dem Bund (3) und dem Boden (4) herausgearbeitet ist, die die Funktion haben, den Durchgang der Schrauben (10) für das vorübergehende Anbringen des Kastens (1) an einer Platte (L1) der offenen Wand zu ermöglichen.

5. BEFESTIGUNG DES VERTEILER- ODER WANDKASTEN nach einem oder mehreren der vorstehenden Ansprüche, **dadurch gekennzeichnet, dass** folgende Schritte vorgesehen sind:
a) vorübergehende Befestigung: Nach Anfertigen einer offenen Wand mit der Platte (L1) wird der Kasten (1) an der Innenfläche (S1) angebracht, die dem Luftraum (101) gegenüberliegt, wobei er gegen den Bund (3) oder den Boden (4) mittels des Eindrehen von Schrauben (10) durch das Paar von Löchern (5, 6) in Anlage gebracht wird;
b) Verbinden der Elektrokabel: Die Wellrohre (T) der elektrischen Leitungen werden mit dem Kasten (1) verbunden;
c) Herstellen der Fertigwand (100): Die Platte (L2), die den Kasten (1) in dem Luftraum (101) hält, wird an der Metallhalterungsstruktur befestigt;
d) endgültiges Befestigen: Die Schrauben (20) werden von außen eingedreht, um den Bund (3) oder den Boden (4) in Eingriff zu nehmen.

6. GIPSKARTONWAND, **dadurch gekennzeichnet, dass** sie Verteiler- oder Wandkästen gemäß einem oder mehreren der Ansprüche 1 bis 4 umfasst.

7. GIPSKARTONWAND, **dadurch gekennzeichnet, dass** die Verteiler- oder Wandkästen (1) nach den Verfahren des Anspruchs 5 befestigt werden.

## Revendications

1. BOITE DE JONCTION OU MURALE DESTINEE A ETRE UTILISEE POUR CONFIGURER DES SYSTEMES ELECTRIQUES DANS DES MURS EN PLACOPLATRE, ladite boîte (1) comprenant un conteneur en forme de boîte (2), profilé de manière qu'il soit susceptible d'être appliqué sur un mur non fini dit « ouvert », c'est-à-dire quand une unique feuille (L1) ou une pluralité de feuilles (L1) est montée, mutuellement placées en appui, sur la structure métallique de support du mur de placoplâtre, étant prévu en outre que, dans le mur de placoplâtre fini (100), la boîte (1) se positionne complètement dans l'espace d'air (101) défini entre les deux feuilles opposées (L1, L2), la boîte ayant une largeur (X) égale à la largeur (K) de l'espace d'air (101), de manière à être en butée contre les deux surfaces intérieures (SI, S2) des deux feuilles (L1, L2), la boîte étant **caractérisée en ce que** le corps en forme de boîte (2) est muni au niveau de l'ouverture frontale d'un collier épais (3) et **en ce que** l'arrière est fermé par un fond épais (4).

2. BOITE DE JONCTION OU MURALE selon la revendication 1, **caractérisée en ce que** la portion de matériau qui forme le collier (3) et la paroi de fond (4) a une structure alvéolaire (7, 8).

3. BOITE DE JONCTION OU MURALE selon la revendication 2, **caractérisée en ce que** la structure alvéolaire (7, 8) est définie par des trous quadrilatéraux de dimension telle qu'elle garantisse un vissage stable des vis (20) également quand le matériau constituant le collier (3) et le fond (4) est du type plastique, avec une dureté et une résistance limitées.

4. BOITE DE JONCTION OU MURALE selon une ou plusieurs des revendications précédentes, **caractérisée en ce qu'**une paire de trous passants (5, 6) est obtenue sur le collier (3) et sur le fond (4) qui ont pour fonction de permettre le passage des vis (10) pour l'application temporaire de la boîte (1) sur la feuille (L1) du mur ouvert.

5. MONTAGE DE LA BOITE DE JONCTION OU MURALE selon une ou plusieurs des revendications précédentes, **caractérisée en ce qu'**il comporte les étapes suivantes :
a) la fixation temporaire : après la réalisation d'un mur ouvert avec la feuille (L1), la boîte (1) est appliquée dans la surface intérieure (SI), celle faisant face à l'espace d'air (101), en l'amenant en butée contre le collier (3) ou le fond (4), en vissant des vis (10) à travers les paires de trous (5, 6);
b) la connexion des câbles électriques : les tubes ondulés (T) des câbles électriques sont connectés à la boîte (1) ;
c) la réalisation du mur fini (100) : la feuille (L2) qui emprisonne la boîte (1) dans l'espace d'air (101) est montée sur la structure métallique de support ;
d) la fixation finale : les vis (20) sont vissées de l'extérieur pour s'engager sur le collier (3) ou le fond (4).

6. MUR EN PLACOPLATRE **caractérisé en ce qu'**il comprend des boîtes de jonction ou murales selon une ou plusieurs des revendications 1 à 4.

7. MUR EN PLACOPLATRE **caractérisé en ce que** la ou les boîtes de jonction ou murales (1) sont montées selon les procédés de la revendication 5.
